(19) Europäisches Patentamt

European Patent Office

Office européen des brevets

(11) **EP 2 145 807 A2**

(12) **EUROPÄISCHE PATENTANMELDUNG**

(43) Veröffentlichungstag:
    **20.01.2010 Patentblatt 2010/03**

(51) Int Cl.:
    ***B60T 1/087*** *(2006.01)*     ***B60T 10/02*** *(2006.01)*

(21) Anmeldenummer: **09163061.6**

(22) Anmeldetag: **18.06.2009**

(84) Benannte Vertragsstaaten:
    **AT BE BG CH CY CZ DE DK EE ES FI FR GB GR HR HU IE IS IT LI LT LU LV MC MK MT NL NO PL PT RO SE SI SK TR**

(30) Priorität: **16.07.2008 DE 102008040458**

(71) Anmelder: **ZF Friedrichshafen AG**
    **88038 Friedrichshafen (DE)**

(72) Erfinder:
    • **Reisch, Bernhard**
      **88316, Isny (DE)**
    • **Schmidtner, Peter**
      **88131, Lindau (DE)**

(54) **Bremsmomentermittlung eines Retarders**

(57)      Die Erfindung betrifft ein Verfahren zur Bremsmomentermittlung eines Retarders eines Fahrzeuges, wobei wenigstens eine Fahrzustandsänderung zwischen einem ersten Zeitpunkt ($t_1$) und einem zweiten Zeitpunkt ($t_2$) ausgewertet wird.

Für eine Retarderbremsmomentermittlung, die unabhängig vom Funktionsprinzip des Retarders ist, und die mit einem geringen Aufwand für Herstellung, Messtechnik und Berechnung auskommt, werden folgende Schritte durchgeführt:

i) Erfassen der Fahrzeugbeschleunigung ($a_{Frzg,1}$, $a_{Frzg,2}$) oder einer dazu äquivalenten Größe zu den beiden Zeitpunkten ($t_1$, $t_2$),

j) Erfassen der Fahrzeugmasse ($m_{Frzg}$),

k) Bestimmen einer Fahrzeugkonfiguration oder einer dazu äquivalenten Größe, und

l) Berechnen einer Retarderbremsmomentänderung ($\Delta M_{Ret}$) oder eines absoluten Retarderbremsmomentes ($M_{Ret,1}$, $M_{Ret,2}$) mittels eines vorgegebenen Rechenalgorithmus aus den erfassten und/oder daraus abgeleiteter Größen.

Eine Vorrichtung weist eine Steuerungs- und Berechnungseinheit (1) mit Mitteln zur Erfassung von Eingangsgrößen des Verfahrens und zur Berechnung von Retarderbremsmomenten auf.

Fig. 1

**Beschreibung**

Die Erfindung betrifft ein Verfahren zur Bremsmomentermittlung eines Retarders eines Fahrzeugs gemäß dem Oberbegriff des Patentanspruchs 1 sowie eine Vorrichtung zur Bremsmomentermittlung eines Retarders eines Fahrzeugs gemäß dem Oberbegriff des Patentanspruchs 9.

Retarder werden in Kraftfahrzeugen, vorzugsweise in Nutzfahrzeugen, als zusätzliche verschleißfreie Dauerbremseinrichtungen zur Entlastung der üblichen, als Reibungsbremsen ausgebildeten Radbremsen eingesetzt. Derartige Dauerbremseinrichtungen sind mit unterschiedlichen Funktionsprinzipien bekannt. Sie können beispielsweise als Hydrodynamikretarder, Elektroretarder, Wasserretarder oder allgemein als Motorbremsen Verwendung finden. Insbesondere bei Bremsvorgängen bei hohen Geschwindigkeiten sowie bei Fahrzeugen mit hohem Gesamtgewicht und bei längeren Bergabfahrten verhindern Retarder den vorzeitigen Verschleiß und die thermische Überlastung der Fahrzeugbremsen. Zusätzlich wird auch der Bremskomfort durch Anpassungsbremsungen, beispielsweise ein Konstanthalten der Geschwindigkeit im Gefälle, verbessert. Während früher ein ungefähres Wissen des aktuellen Retarderbremsmomentes für die Steuerung und Einstellung der vorhandenen Bremseinrichtungen in der Regel ausreichte, ist durch die heutige Integration von Retardersystemen in das Antriebsmanagement des Fahrzeugs die genaue Kenntnis des vom Retarder erzeugten Bremsmomentes von zunehmend größerer Bedeutung.

Aus der DE 10 2006 024 011 A1 ist ein Verfahren bekannt, dass eine sehr genaue Bremsmomenteinstellung eines hydrodynamischen Retarders ermöglicht. Das Verfahren beruht im Wesentlichen auf einem Abgleich des, beispielsweise mit einem Drucksensor erfassten, hydraulischen Retarderdruckes mit in einem Speicher abgelegten Kennfeldern.

Verfahren wie dieses, die sich verstärkt auf abgelegte Daten stützten, erfordern meist eine Voreinstellung für jedes einzelne Aggregat an einem Abnahmeprüfstand. Bei einem Austausch einer defekten Steuerungselektronik, die auch die Voreinstellung des Retarders betrifft, entsteht die Schwierigkeit, dass das Aggregat in der Regel nicht erneut an dem Abnahmeprüfstand eingestellt werden kann. Somit ist eine relativ aufwendige und kostenintensive Dokumentation, Verwaltung und Bereitstellung aller am Abnahmeprüfstand ermittelten Daten jedes einzelnen Retarders erforderlich. Zusätzlich müssen Möglichkeiten vorgehalten werden, diese Daten im Reparaturfall vor Ort zur Verfügung zu stellen und in die Steuerelektronik einlesen zu können.

Aus der DE 102 33 133 A1 und der DE 101 46 252 A1 sind Verfahren bekannt, die Kraft- oder Drehmomentsensoren verwenden, über die das Bremsmoment eines Retarders direkt gemessen werden kann. Solche Verfahren erfordern jedoch, je nach Funktionsprinzip, eine relativ kostenintensive Sensorik sowie einen vergleichsweise hohen Konstruktions- und Herstellungsaufwand.

Weiterhin ist aus der DE 10 2005 008 970 A1 ein einfaches Verfahren bekannt, auf der Basis einer Fahrzustandsänderung, insbesondere zu Beginn oder Ende einer Retarderbremsung, die aktuelle Fahrzeugmasse zu bestimmen. Ein vergleichbares Verfahren, dass die Fahrzeugmasse aus einer Betrachtung der Fahrzeugbeschleunigung vor und nach dem Einschalten einer Bremseinrichtung herleitet, ist auch aus der DE 197 24 092 A1 bekannt. Diese Verfahren verwenden ein Retarderbremsmoment als Eingangsgröße, setzen also dessen Kenntnis voraus.

Zudem sind die bekannten Verfahren zur Ermittlung des Retarderbremsmoments meistens an ein jeweiliges Funktionsprinzip geknüpft und auf andere Retardersysteme nicht oder nur mit erhöhtem Aufwand übertragbar.

Vor diesem Hintergrund liegt der Erfindung die Aufgabe zugrunde, ein Verfahren und eine Vorrichtung zu entwickeln, die mit geringem Aufwand an Herstellungskosten, Messtechnik und Berechnungsressourcen die Ermittlung eines Retarderbremsmomentes eines Fahrzeuges im Fahrbetrieb, unabhängig vom Funktionsprinzip des Retarders, ermöglichen.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass in heutigen Fahrzeugen, insbesondere in Nutzfahrzeugen, häufig die aktuelle Fahrzeugmasse in entsprechenden Steuerungsgeräten bekannt ist, und dass mit Kenntnis dieser Fahrzeugmasse, unter vereinfachenden Annahmen, das Bremsmoment des Retarders aus einer einfachen Vergleichsbetrachtung einer retarderverursachten Fahrzeugbeschleunigung während eines kurzen Zeitintervalls ableitbar ist.

Demnach geht die Erfindung aus von einem Verfahren zur Bremsmomentermittlung eines Retarders eines Fahrzeuges, wobei wenigstens eine Fahrzustandsänderung zwischen einem ersten Zeitpunkt und einem zweiten Zeitpunkt ausgewertet wird. Zur Lösung der gestellten Aufgabe sieht die Erfindung vor, dass folgende Schritte durchgeführt werden:

a) Erfassen der Fahrzeugbeschleunigung oder einer dazu äquivalenten Größe zu den beiden Zeitpunkten,
b) Erfassen der Fahrzeugmasse,
c) Bestimmen einer Fahrzeugkonfiguration oder einer dazu äquivalenten Größe, und
d) Berechnen einer Retarderbremsmomentänderung oder eines absoluten Retarderbremsmomentes mittels eines vorgegebenen Rechenalgorithmus aus den erfassten und/oder daraus abgeleiteter Größen.

Weiterhin geht die Erfindung aus von einer Vorrichtung zur Bremsmomentermittlung eines Retarders eines Fahrzeuges, mit der wenigstens eine Fahrzustandsänderung zwischen einem ersten Zeitpunkt und einem zweiten Zeitpunkt auswertbar ist. Die gestellte Aufgabe bezüglich der Vorrichtung wird dadurch gelöst, dass eine Steuerungs- und Berechnungseinheit vorgesehen ist, die folgendes aufweist:

a) Mittel zum Erfassen der Fahrzeugbeschleunigung oder einer dazu äquivalenten Größe zu den beiden Zeitpunkten,
b) Mittel zum Erfassen der Fahrzeugmasse,
c) Mittel zum Bestimmen einer Fahrzeugkonfiguration aus einer Achsübersetzung und einem dynamischen Reifenradius, oder aus der Fahrzeuggeschwindigkeit und der Retarderdrehzahl, sowie
d) Mittel zum Berechnen von Retarderbremsmomentänderungen und absoluten Retarderbremsmomenten.

Unter einer Fahrzeugbeschleunigung werden sowohl positive, d.h. geschwindigkeitserhöhende Beschleunigungen, als auch negative, d.h. geschwindigkeitsverringernde Verzögerungen verstanden. Entsprechend sind die betrachteten Beschleunigungen vorzeichenbehaftet zu verwenden.

Die Erfindung beruht auf der Betrachtung eines Zeitintervalls bei einer Fahrzustandsänderung, welche dem Retarder zugeordnet werden kann. Um das Verfahren vorteilhaft zu vereinfachen, um also möglichst viele Informationen auszuschließen, die eigentlich für eine Berechnung des Retarderbremsmomentes nötig wären, wird vorausgesetzt, dass sich in einem sehr kurzen zu betrachtenden Zeitintervall, typischerweise in der Größenordnung 1 - 2 Sekunden, beeinflussende Randbedingen nicht oder allenfalls marginal ändern. Das bedeutet insbesondere, dass im Betrachtungszeitraum das Gefälle bzw. die Steigung der Straße gleich bleibt, die Fahrzeuggeschwindigkeit sich nicht spürbar ändert, Kupplungselemente im Antriebsstrang nicht betätigt werden, und angreifende Antriebs- und Bremsmomente - abgesehen vom Retarderbremsmoment - gleich bleiben. Unter diesen Bedingungen spiegelt eine Änderung der Fahrzeugbeschleunigung bzw. Fahrzeugverzögerung in dem Zeitintervall eine Änderung des Retarderbremsmomentes wider. Werden zudem weitere angreifende Kräfte, insbesondere der Luftwiderstand des Fahrzeuges sowie Reibkräfte vernachlässigt, kann mit diesen Annahmen die einfache Fahrwiderstandsgleichung

$$F_{Hang} = F_{Beschl} - F_{Brems} \text{ mit}$$

$$F_{Beschl} = m_{Frzg} * a_{Frzg} \quad \text{und} \quad F_{Brems} = M_{Ret} * \frac{i_{HA}}{r_{dyn}}$$

aufgestellt und als hinreichend genau angenommen werden. Darin bedeuten

$F_{Hang}$: Hangabtriebskraft,
$F_{Beschl}$: Kraft die der Beschleunigung/Verzögerung des Fahrzeuges entspricht,
$F_{Brems}$: Bremskraft an einem Fahrzeugrad bzw. an den Fahrzeugrädern,
$m_{Frzg}$: Fahrzeugmasse
$a_{Frzg}$: Fahrzeugbeschleunigung, Fahrzeugverzögerung
$M_{Ret}$: Bremsmoment des Retarders,
$i_{HA}$: Achsübersetzung, hier: Hinterachsübersetzung, und
$r_{dyn}$: dynamischer Reifenradius; entspricht dem wirksamen Abrollradius, welcher aus einer zurückgelegten Strecke und der Anzahl der Radumdrehungen bestimmt werden kann.

Durch die Betrachtung eines sehr kurzen Zeitintervalls $\Delta t = |t_1 - t_2|$, wobei idealerweise der Anfangszeitpunkt unmittelbar vor einer Retarderbremsmomentänderung und der Endzeitpunkt unmittelbar nach einer Retarderbremsmomentänderung liegt, kann die Hangabtriebskraft als konstant angenommen und die Bremskraft sowie die Beschleunigungskraft zu den beiden Zeitpunkten $t_1$ und $t_2$ in Beziehung gesetzt werden, woraus für die Retarderbremsmomentänderung

$$\Delta M_{Ret} = M_{Ret,2} - M_{Ret,1} = \frac{r_{dyn}}{i_{Ha}} * m_{Frzg} * (a_{Frzg,2} - a_{Frzg,1})$$

folgt.

Die Fahrzeugkonfiguration, in dem Ausführungsbeispiel der zuletzt genannten Gleichung also der Quotient aus dem dynamischen Reifenradius $r_{dyn}$ und der relevanten Achsübersetzung $i_{HA}$, bei Nutzfahrzeugen in der Regel die Hinterachsübersetzung, kann für das jeweilige Fahrzeug vorgegeben werden. Grundsätzlich ist sogar eine gemittelte Fahrzeugkonfiguration als konstante Eingangsgröße für alle Fahrzeuge eines Typs möglich.

In der oben angeführten Gleichung zur Bestimmung der Retarderbremsmomentänderung $\Delta M_{Ret}$ kann der Quotient von dynamischem Reifenradius $r_{dyn}$ und Achsübersetzung $i_{HA}$ auch durch die Werte für die Fahrzeuggeschwindigkeit $v_{Fzg}$ und die Retarderdrehzahl $n_{Ret}$ ersetzt werden, da diese Werte durch die Gleichung

$$\frac{r_{dyn}}{i_{HA}} = \frac{v_{Fzg} * 1000}{2\pi * 60 * n_{Ret}}$$

miteinander verbunden sind. Insofern spiegelt das Verhältnis von Fahrzeuggeschwindigkeit $v_{Fzg}$ zu der Retarderdrehzahl $n_{Ret}$ die baulichen Verhältnisse im Antriebsstrang des Fahrzeugs und damit dessen Konfiguration wider.

Die aktuelle Fahrzeugmasse wird häufig von elektronischen Steuerungen im Fahrzeug, z.B. einer Bremssteuerung oder einer Getriebesteuerung ohnehin ermittelt und kann einer Retardersteuerung als Eingangsgröße zur Verfügung gestellt werden. Grundsätzlich kann jeder vom Retraderbremsmoment unabhängige Berechnungsalgorithmus für die Fahrzeugmasse oder andere Informationen, die die Fahrzeugmasse repräsentieren, in der Retardersteuerung implementiert werden. Beispielhaft seien dazu die DE 198 37 380 A1 und die darin erwähnten weiteren Druckschriften genannt.

Die Fahrzeugbeschleunigung kann aus dem meist ohnehin zur Verfügung stehenden kontinuierlichen Fahrzeuggeschwindigkeitssignal abgeleitet werden. Somit kann aus den Fahrzeugbeschleunigungen bzw. Fahrzeugverzögerungen zu den beiden Zeitpunkten mit geringem Rechenaufwand und ohne zusätzliche Sensormittel oder besondere Sensorsignale eine Retarderbremsmomentänderung, unabhängig von der Art des eingesetzten Retarders, nach obiger Beziehung leicht berechnet werden. Die berechneten Bremsmomentwerte stehen dann zur genauen Einstellung des Retarder-Systems bzw. den gesamten Bremseinrichtungen zur Verfügung. Der Resourcenverbrauch (RAM, ROM, Rechenzeit) des Verfahrens in einer Steuerelektronik ist vergleichsweise gering. Da die Berechnung sehr einfach ist, und relativ wenige Informationen benötigt werden, wird zudem eine hohe Ausfallsicherheit erreicht.

Besonders vorteilhaft ist es, ein möglichst kurzes Zeitintervall mit einer möglichst großen Retarderbremsmomentänderung, d.h. mit einer möglichst großen Änderung der vom Retarder verursachten Fahrzeugbeschleunigung zu betrachten, wodurch eine hohe Genauigkeit und Zuverlässigkeit des berechneten Ergebnisses erreicht wird. Dies ist insbesondere beim Ein- oder Ausschalten des Retarders der Fall, da hierbei eine signifikante Beschleunigungsänderung, die die Änderung des Retarderbremsmomentes eindeutig widerspiegelt, detektierbar ist.

Der Einschaltfall bzw. Ausschaltfall ermöglicht zudem die Bestimmung des absoluten Bremsmomentes zu einem Zeitpunkt, da jeweils eines der Retarderbremsmomente im Zeitintervall wegfällt, also der Wert von 0 Nm angenommen werden kann. Daraus ergibt sich für den Einschaltfall

$$M_{Ret,1} = 0Nm \Rightarrow M_{Ret,2} = \frac{r_{dyn}}{i_{Ha}} * m_{Frzg} * \left(a_{Frzg,2} - a_{Frzg,1}\right),$$

und für den Ausschaltfall:

$$M_{Ret,2} = 0Nm \Rightarrow M_{Ret,1} = -\frac{r_{dyn}}{i_{Ha}} * m_{Frzg} * \left(a_{Frzg,2} - a_{Frzg,1}\right).$$

Für den Fall, dass die Dynamik des zur Verfügung stehenden Fahrzeuggeschwindigkeitssignals für die Ermittlung der Fahrzeugbeschleunigung eher unzureichend ist, d.h. die Signalgüte nicht ausreicht, kann vorteilhaft die bei Retarder-Systemen üblicherweise zur Verfügung stehende Retarderdrehzahl zur Substitution der Beschleunigung nach der Beziehung

$$a_{Frzg} = \frac{\dot{n}_{Ret}}{60} * \frac{2\pi * r_{dyn}}{i_{HA}} = \frac{\dot{n}_{Ret} * \pi * r_{dyn}}{30 * i_{HA}}$$

verwendet werden. Darin steht $\dot{n}_{Ret}$ für die zeitliche Ableitung der Drehzahl des Retarders, der Faktor 60 für die Umrechnung in U/min und der Term $2\pi * r_{dyn}$ für den dynamischen Reifenumfang.

Demnach lässt sich eine Retarderbremsmomentänderung auch aus der Gleichung

$$\Delta M_{Ret} = M_{Ret,2} - M_{Ret,1} = \frac{\pi * r_{dyn}^2}{30 * i_{HA}^2} * m_{Frzg} * (\dot{n}_{Ret,2} - \dot{n}_{Ret,1})$$

bestimmen. Für die Berechnung eines absoluten Bremsmomentes zu Beginn oder am Ende einer Retarderbremsung ergibt sich entsprechend für den Einschaltfall

$$M_{Ret,1} = 0Nm \Rightarrow M_{Ret,2} = \frac{\pi * r_{dyn}^2}{30 * i_{HA}^2} * m_{Frzg} * (\dot{n}_{Ret,2} - \dot{n}_{Ret,1}),$$

und für den Ausschaltfall:

$$M_{Ret,2} = 0Nm \Rightarrow M_{Ret,1} = -\frac{\pi * r_{dyn}^2}{30 * i_{HA}^2} * m_{Frzg} * (\dot{n}_{Ret,2} - \dot{n}_{Ret,1}).$$

Grundsätzlich ist auch jedes andere zur Verfügung stehende Geschwindigkeits- oder Drehzahlsignal, aus dem die Fahrzeugbeschleunigung direkt ermittelt oder abgeleitet werden kann, als Eingangsgröße für das erfindungsgemäße Verfahren geeignet. So kann die Fahrzeugbeschleunigung $a_{Frzg,1}$, $a_{Frzg,2}$ auch durch eine zeitliche Ableitung der Getriebeeingangswellendrehzahl oder, bei geschlossener Antriebsverbindung zwischen dem Antriebsmotor und den angetriebenen Fahrzeugrädern, durch die zeitliche Ableitung der Drehzahl des Antriebsmotors berechnet werden. In jedem Fall ist für die Genauigkeit eines einzelnen ermittelten Retarderbremsmomentes die Genauigkeit der ermittelten Fahrzeugbeschleunigungen bzw. Fahrzeugverzögerungen oder Drehzahländerungen oder dazu äquivalenter Größen, sowie die Genauigkeit der Erfassung der aktuell vorhandenen Fahrzeugmasse, ausschlaggebend.

Die Genauigkeit des Verfahrens kann weiter gesteigert werden, indem mehrere Zeitintervalle ausgewertet werden, also indem die aus mehreren Berechnungen hervorgehenden Bremsmomente durch eine geeignete Mittelung zusammengefasst bzw. abgeglichen werden und daraus ein Retarderbremsmomentmittelwert gebildet wird.

Um eine weitere Verbesserung des Ergebnisses zu erreichen, ist eine Selektion bzw. Priorisierung von einzelnen Berechnungen, die unter besonders günstigen Randbedingungen durchgeführt werden, sinnvoll. Besonders geeignet sind Berechnungen während schnellen, großen, retarderbedingten Änderungen der Fahrzeugbeschleunigung bzw. Fahrzeugverzögerung, wobei gleichzeitig weder eine merkliche Fahrbahnsteigungsänderung noch eine spürbare Fahrzeuggeschwindigkeitsänderung oder eine äußere Antriebsmoment- bzw. Bremsmomentänderung oder eine Zugkraftunterbrechung durch Schaltelemente im Antriebsstrang auftritt. Solche Bedingungen entstehen, wie bereits beschrieben, vorwiegend beim Ein- bzw. Ausschalten des Retardersystems.

Schließlich kann vorgesehen sein, dass als eine weitere Anwendung des Verfahrens die ermittelten Retarderbremsmomente für eine Funktionsüberwachung des Retarders herangezogen werden. Dabei sind Funktionalitäten möglich, mit deren Hilfe die Ansprechreaktion des Retarders plausibilisiert und gegebenenfalls Fehler erkannt werden können. Als Beispiel sei erwähnt, dass etwa bei einem hydrodynamischen Retarder durch das Klemmen eines Ventils der Retarder nicht einschaltet. Dies kann mit dem erfindungsgemäßen Verfahren sehr schnell erkannt werden. Eine herkömmliche Beobachtung einer Öl- oder Kühlmitteltemperatur würde einen derartigen Defekt erst sehr viel später anzeigen. Durch eine gezielte, frühzeitige Fehlerinformation kann der Fahrer jedoch entsprechend schnell reagieren und eine möglicherweise unvorteilhafte Situation verhindern.

Zur Verdeutlichung der Erfindung ist der Beschreibung eine Zeichnung eines Ausführungsbeispiels beigefügt. In dieser zeigt

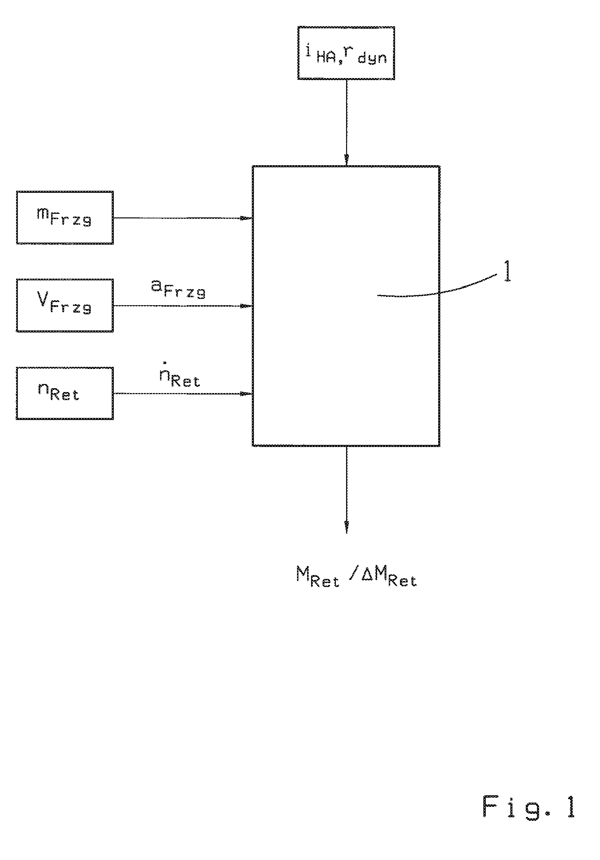

Fig. 1 eine Steuerungs- und Berechnungseinheit zur Ermittlung eines Retarderbremsmomentes eines Fahrzeuges.

Demnach ist in Fig. 1 eine Steuerungs- und Berechnungseinheit 1, wie sie beispielsweise einem (nicht dargestellten) Retardersystem eines Nutzfahrzeuges zugeordnet sein kann, schematisch dargestellt. Schaltet sich, beispielsweise auf einer Gefällstrecke, das Retardersystem zu einem Zeitpunkt $t_1$ ein, wird der Steuerungs- und Berechnungseinheit 1 als Eingangsgrößen zum Bestimmen einer Fahrzeugkonfiguration die Hinterachsübersetzung $i_{HA}$ sowie der dynamische Reifenradius $r_{dyn}$ zur Verfügung gestellt. Diese Daten können vorab bestimmt sein und aus einem Speicher ausgelesen werden. Beispielweise über ein Getriebe- oder Bremssteuergerät wird der Steuerungs- und Berechnungseinheit 1 die zuvor bestimmte aktuelle Fahrzeugmasse $m_{Frzg}$ als Eingangssignal zugeführt. Als dynamische Eingangsgrößen liegen ein Fahrzeuggeschwindigkeitssignal $v_{Frzg}$ sowie ein Retarderdrehzahlsignal $n_{Ret}$ an, von denen, abhängig von einer Signalgüte, vorzugsweise das momentane Geschwindigkeitssignal $v_{Frzg}$, ansonsten das momentane Retarderdrehzahlsignal $n_{Ret}$, jeweils zu einem Zeitpunkt $t_1$ und $t_2$ eingelesen wird.

Aus den Eingabewerten zu den Zeitpunkten $t_1$ und $t_2$ ermittelt die Steuerungs- und Berechnungseinheit 1 die jeweilige Fahrzeugbeschleunigung $a_{Frzg,1}$, $a_{Frzg,2}$ oder die jeweilige zeitliche Ableitung der Retarderdrehzahl $\dot{n}_{Ret,1}$, $\dot{n}_{Ret,2}$ und berechnet für den betrachteten Einschaltfall aus der Gleichung

$$M_{Ret,1} = 0Nm \Rightarrow M_{Ret,2} = \frac{r_{dyn}}{i_{Ha}} * m_{Frzg} * (a_{Frzg,2} - a_{Frzg,1})$$

bzw. aus der Gleichung

$$M_{Ret,1} = 0Nm \Rightarrow M_{Ret,2} = \frac{\pi * r_{dyn}^2}{30 * i_{HA}^2} * m_{Frzg} * (\dot{n}_{Ret,2} - \dot{n}_{Ret,1})$$

das absolute Bremsmoment $M_{Ret,2}$. Dieser Wert wird als das aktuelle Retarderbremsmoment $M_{Ret}$ ausgegeben. Schaltet sich der Retarder nach der Gefällstrecke wieder aus, kann auf analoge Weise das absolute Bremsmoment

$$M_{Ret,2} = 0Nm \Rightarrow M_{Ret,1} = -\frac{r_{dyn}}{i_{Ha}} * m_{Frzg} * (a_{Frzg,2} - a_{Frzg,1})$$

bzw.

$$M_{Ret,2} = 0Nm \Rightarrow M_{Ret,1} = -\frac{\pi * r_{dyn}^2}{30 * i_{HA}^2} * m_{Frzg} * (\dot{n}_{Ret,2} - \dot{n}_{Ret,1})$$

des Ausschaltfalles ermittelt werden. Bei allen anderen Zeitintervallen $\Delta t$ entspricht das Ergebnis der Retarderbremsmomentänderung

$$\Delta M_{Ret} = M_{Ret,2} - M_{Ret,1} = \frac{r_{dyn}}{i_{Ha}} * m_{Frzg} * (a_{Frzg,2} - a_{Frzg,1})$$

bzw.

$$\Delta M_{Ret} = M_{Ret,2} - M_{Ret,1} = \frac{\pi * r_{dyn}^2}{30 * i_{HA}^2} * m_{Frzg} * (\dot{n}_{Ret,2} - \dot{n}_{Ret,1})$$

während der betrachteten Fahrzustandsänderung.

Bezugszeichenliste

| | |
|---|---|
| 1 | Steuerungs- und Berechnungseinheit |
| $F_{Beschl}$ | Beschleunigungskraft, Verzögerungskraft |
| $F_{Brems}$ | Bremskraft |
| $F_{Hang}$ | Hangabtriebskraft |
| $M_{Ret}$ | Retarderbremsmoment |
| $\Delta M_{Ret}$ | Retarderbremsmomentänderung |
| $a_{Frzg}$ | Fahrzeugbeschleunigung, Fahrzeugverzögerung |
| $i_{HA}$ | Achsübersetzung, Hinterachsübersetzung |
| $m_{Frzg}$ | Fahrzeugmasse |
| $n_{Ret}$ | Retarderdrehzahl |
| $\dot{n}_{Ret}$ | Zeitliche Ableitung der Retarderdrehzahl |
| $r_{dyn}$ | Dynamischer Reifenradius |
| $t_1$ | Erster Zeitpunkt |
| $t_2$ | Zweiter Zeitpunkt |
| $\Delta t$ | Zeitintervall |
| $v_{Frzg}$ | Fahrzeuggeschwindigkeit |

**Patentansprüche**

1. Verfahren zur Bremsmomentermittlung eines Retarders eines Fahrzeuges, wobei wenigstens eine Fahrzustandsänderung zwischen einem ersten Zeitpunkt ($t_1$) und einem zweiten Zeitpunkt ($t_2$) ausgewertet wird, **dadurch gekennzeichnet, dass** folgende Schritte durchgeführt werden:

   e) Erfassen der Fahrzeugbeschleunigung ($a_{Frzg,1}$, $a_{Frzg,2}$) oder einer dazu äquivalenten Größe zu den beiden Zeitpunkten ($t_1$, $t_2$),
   f) Erfassen der Fahrzeugmasse ($m_{Frzg}$),
   g) Bestimmen einer Fahrzeugkonfiguration oder einer dazu äquivalenten Größe, und
   h) Berechnen einer Retarderbremsmomentänderung ($\Delta M_{Ret}$) oder eines absoluten Retarderbremsmomentes ($M_{Ret,1}$, $M_{Ret,2}$) mittels eines vorgegebenen Rechenalgorithmus aus den erfassten und/oder daraus abgeleiteten Größen.

2. Verfahren nach Anspruch 1, **dadurch gekennzeichnet, dass** die Bestimmung der Fahrzeugkonfiguration mit Hilfe der Achsübersetzung ($i_{HA}$) und dem dynamischen Reifenradius ($r_{dyn}$) der angetriebenen Fahrzeugräder erfolgt.

3. Verfahren nach Anspruch 1 oder 2, **dadurch gekennzeichnet, dass** die Bestimmung der zur Fahrzeugkonfiguration äquivalenten Größe aus der Fahrzeuggeschwindigkeit $v_{Frzg}$ und der Retarderdrehzahl $n_{Ret}$ gemäß der

$$\text{Gleichung} \quad \frac{r_{dyn}}{i_{HA}} = \frac{v_{Fzg} * 1000}{2\pi * 60 * n_{Ret}} \quad \text{erfolgt.}$$

**4.** Verfahren nach Anspruch 2 oder 3, **dadurch gekennzeichnet, dass** eine Retarderbremsmomentänderung ($\Delta M_{Ret}$) nach der Beziehung

$$\Delta M_{Ret} = M_{Ret,2} - M_{Ret,1} = \frac{r_{dyn}}{i_{Ha}} * m_{Frzg} * (a_{Frzg,2} - a_{Frzg,1})$$

berechnet wird.

**5.** Verfahren nach Anspruch 4, **dadurch gekennzeichnet, dass** die Fahrzeugbeschleunigung ($a_{Frzg,1}$, $a_{Frzg,2}$) nach der Beziehung

$$a_{Frzg} = \frac{\dot{n}_{Ret} * \pi * r_{dyn}}{30 * i_{HA}}$$

durch eine zeitliche Ableitung der Retarderdrehzahl ($\dot{n}_{Ret1}$, $\dot{n}_{Ret2}$) ersetzt wird, oder durch die zeitliche Ableitung der Getriebeeingangswellendrehzahl, oder bei geschlossener Antriebsverbindung zwischen dem Antriebsmotor und den angetriebenen Fahrzeugrädern durch die zeitliche Ableitung der Drehzahl des Antriebsmotors.

**6.** Verfahren nach einem der Ansprüche 1 bis 5, **dadurch gekennzeichnet, dass** der Retarder zum ersten Zeitpunkt ($t_1$) eingeschaltet und ein absolutes Retarderbremsmoment $M_{Ret,2}$ unter der Annahme $M_{Ret,1} = 0Nm$ berechnet wird.

**7.** Verfahren nach einem der Ansprüche 1 bis 5, **dadurch gekennzeichnet, dass** der Retarder zum zweiten Zeitpunkt ($t2$) ausgeschaltet und ein absolutes Retarderbremsmoment $M_{Ret,1}$ unter der Annahme $M_{Ret,2} = 0Nm$ berechnet wird.

**8.** Verfahren nach einem der Ansprüche 1 bis 7, **dadurch gekennzeichnet, dass** mehrere Zeitintervalle ($\Delta t$) ausgewertet werden und daraus ein Retarderbremsmomentmittelwert gebildet wird.

**9.** Verfahren nach einem der Ansprüche 1 bis 8, **dadurch gekennzeichnet, dass** Zeitintervalle ($\Delta t$) priorisiert berücksichtigt werden, für die wenigstens eine der folgenden ausschließenden Randbedingungen erfüllt ist:

- keine signifikante Fahrbahnsteigungsänderung,
- keine signifikante retarderunabhängige Antriebsmomentänderung,
- keine signifikante retarderunabhängige Bremsmomentänderung,
- keine signifikante retarderunabhängige Fahrzeuggeschwindigkeitsänderung,
- keine signifikante Zugkraftunterbrechung durch Schaltelemente im Antriebsstrang.

**10.** Verfahren nach einem der Ansprüche 1 bis 9, **dadurch gekennzeichnet, dass** die ermittelten Retarderbremsmomente für eine Funktionsüberwachung des Retarders herangezogen werden.

**11.** Vorrichtung zur Bremsmomentermittlung eines Retarders eines Fahrzeuges, wobei wenigstens eine Fahrzustandsänderung zwischen einem ersten Zeitpunkt ($t_1$) und einem zweiten Zeitpunkt ($t_2$) auswertbar ist, **dadurch gekennzeichnet, dass** eine Steuerungs- und Berechnungseinheit (1) vorgesehen ist, die folgendes aufweist:

e) Mittel zum Erfassen der Fahrzeugbeschleunigung ($a_{Frzg,1}$, $a_{Frzg,2}$) oder einer dazu äquivalenten Größe zu den beiden Zeitpunkten ($t_1$, $t_2$),

f) Mittel zum Erfassen der Fahrzeugmasse ($m_{Frzg}$),

g) Mittel zum Bestimmen einer Fahrzeugkonfiguration aus einer Achsübersetzung ($i_{HA}$) und einem dynamischen Reifenradius ($r_{dyn}$), oder aus der Fahrzeuggeschwindigkeit ($v_{Fzg}$) und der Retarderdrehzahl ($n_{Ret}$), sowie

h) Mittel zum Berechnen von Retarderbremsmomentänderungen ($\Delta M_{Ret}$) und absoluten Retarderbremsmomenten ($M_{Ret,1}$, $M_{Ret,2}$).

12. Vorrichtung nach Anspruch 11, **dadurch gekennzeichnet, dass** Mittel zur Bildung von Mittelwerten des Retarderbremsmoments vorgesehen sind, wobei vorgegebene Randbedingungen berücksichtigbar sind.

$i_{HA}, r_{dyn}$

$m_{Frzg}$

$V_{Frzg}$    $a_{Frzg}$

$n_{Ret}$    $\dot{n}_{Ret}$

1

$M_{Ret} / \Delta M_{Ret}$

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006024011 A1
- DE 10233133 A1
- DE 10146252 A1
- DE 102005008970 A1
- DE 19724092 A1
- DE 19837380 A1